(19) Europäisches Patentamt
European Patent Office
Office européen des brevets

(11) **EP 4 100 640 B1**

(12) **FASCICULE DE BREVET EUROPEEN**

(45) Date de publication et mention de la délivrance du brevet:
**03.04.2024 Bulletin 2024/14**

(21) Numéro de dépôt: **21706363.5**

(22) Date de dépôt: **01.02.2021**

(51) Classification Internationale des Brevets (IPC):
**F02K 9/42** *(2006.01)*       **F02K 9/64** *(2006.01)*

(52) Classification Coopérative des Brevets (CPC):
**F02K 9/42; F02K 9/64;** F05D 2260/821

(86) Numéro de dépôt international:
**PCT/FR2021/050177**

(87) Numéro de publication internationale:
**WO 2021/156561 (12.08.2021 Gazette 2021/32)**

(54) **PROCÉDÉ DE MISE EN FROID UTILISANT UN RÉSEAU NEURONAL ARTIFICIEL**

KÜHLVERFAHREN UNTER VERWENDUNG EINES KÜNSTLICHEN NEURONALEN NETZES

REFRIGERATION METHOD USING AN ARTIFICIAL NEURAL NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.02.2020 FR 2001092**

(43) Date de publication de la demande:
**14.12.2022 Bulletin 2022/50**

(73) Titulaire: **ArianeGroup SAS**
**78130 Les Mureaux (FR)**

(72) Inventeurs:
• **LE GONIDEC, Serge**
**27207 VERNON CEDEX (FR)**
• **BACHELET, Charles-Hubert**
**27207 VERNON CEDEX (FR)**
• **REICHSTADT, Sébastien**
**27207 VERNON CEDEX (FR)**
• **WOZNIAK, Anne-Laure**
**27207 VERNON CEDEX (FR)**

(74) Mandataire: **Cabinet Beau de Loménie**
**158, rue de l'Université**
**75340 Paris Cedex 07 (FR)**

(56) Documents cités:
FR-A1- 2 994 731       US-A1- 2010 070 098
US-A1- 2017 175 680

**Description**

Domaine Technique

La présente invention concerne le domaine de la mise en froid (en anglais : « chilldown ») des systèmes cryogéniques, et notamment des propulseurs à ergol cryogénique.

Technique antérieure

Avant la mise en fonctionnement d'un système cryogénique, il est connu d'avoir une phase de mise en froid dans laquelle au moins des organes critiques du système cryogénique soient amenés d'une température ambiante à la température de fonctionnement nominal du système cryogénique, et ceci normalement de manière graduelle de façon à éviter un choc thermique lors de la mise en fonctionnement du système cryogénique.

Plus spécifiquement, dans un système cryogénique de propulsion, la mise en froid peut avoir l'objectif d'éviter l'apparition d'au moins les phénomènes suivants:

- cavitation dans au moins une pompe d'alimentation en ergol cryogénique, entraînant une survitesse de la pompe et une chute de performance,
- fragilisation des matériaux à cause des chocs thermiques,
- perte d'étanchéité suite à des gradients thermiques non maîtrisés,
- échauffement et divergence de paliers, et
- déséquilibres statiques et/ou dynamiques de pièces rotatives, à cause de jeux dans les paliers.

Ainsi, cette mise en froid peut être normalement finalisée quand certains critères fonctionnels sont remplis, comme par exemple une température de paroi, un seuil de jeu entre composants mécaniques, ou un autre critère lié à la tenue mécanique de composants tels que, entre autres, des paliers, des brides, des tirants ou des cannelures, ou au fonctionnement subséquent du système cryogénique (par exemple, la non cavitation de pompes, ou le remplissage subséquent reproductible de parties du système cryogénique avec un fluide cryogénique de fonctionnement homogène et monophasique). Ces critères fonctionnels, peuvent être transposés en critères mesurables de fin de mise en froid, utilisables dans des logiques de surveillance pour autoriser la mise en fonctionnement du système cryogénique.

Quand la mise en froid doit toutefois être finalisée à un instant prédéterminé, par exemple avant un rallumage programmé d'un propulseur à ergol cryogénique en vol, des séquences d'ouverture d'une ou plusieurs vannes du circuit d'alimentation en fluide cryogénique doivent normalement être prédéfinies afin de satisfaire les critères prédéterminés de mise en froid à l'instant prédéterminé auquel la mise en froid sera finalisée, et cela indépendamment de nombreux paramètres initiaux, dont notamment l'état physique (températures, pressions) du circuit d'alimentation avant la mise en froid, qui peuvent avoir une grande variabilité. Pour s'assurer de satisfaire les critères de mise en froid à l'instant prédéterminé, même dans les circonstances les plus défavorables, des séquences d'ouverture de vannes sont définies qui, dans une grande proportion des cas, vont entraîner une surconsommation inutile de fluide cryogénique. Quand un ergol est utilisé en tant que fluide cryogénique de mise en froid, cette surconsommation est un gâchis qui pénalise les performances du propulseur qui aurait pu utiliser cet ergol par exemple pour générer de la poussée.

Toutefois, la modélisation du circuit d'alimentation de fluide cryogénique afin de prévoir les séquences d'ouverture de vannes vraiment nécessaires pour satisfaire les critères prédéterminés de mise en froid à l'instant prédéterminé pour la finalisation de la mise en froid est rendue très difficile par la complexité du circuit et des phénomènes physiques associés à la mise en froid (p.ex. la présence d'écoulements diphasiques). Or, les ressources disponibles pour le traitement des données pendant une mise en froid, par exemple dans un ordinateur embarqué d'une unité de commande d'un circuit d'alimentation en ergol d'un lanceur spatial, peuvent être très limitées.

Le document FR2994731 divulgue un procédé de refroidissement selon l'art antérieur.

Exposé de l'invention

La présente divulgation propose un procédé de mise en froid d'un circuit d'alimentation en fluide cryogénique, avec une séquence d'ouverture de vannes ajustable en fonction de paramètres initiaux pour éviter la surconsommation du fluide cryogénique, tout en satisfaisant un ou plusieurs critères prédéterminés de mise en froid à un instant prédéterminé dans le futur, et ceci avec des ressources limitées de traitement de données.

Pour cela, un procédé de mise en froid d'un circuit d'alimentation en fluide cryogénique suivant un premier aspect de cette divulgation comporte une étape d'acquisition d'une valeur d'état du circuit d'alimentation en fluide cryogénique à un instant courant, une étape de calcul, par un ordinateur appliquant un réseau neuronal artificiel, d'un instant correspondant d'ouverture de chaque vanne parmi une ou plusieurs vannes du circuit d'alimentation en fluide cryogénique pour atteindre, à partir de la valeur d'état du circuit d'alimentation en fluide cryogénique à l'instant courant, un état du circuit d'alimentation en fluide cryogénique satisfaisant un ou plusieurs critères prédéterminés de mise en froid à un instant prédéterminé dans le futur, et une étape d'ouverture de chaque vanne à l'instant correspondant pour mettre en froid le circuit d'alimentation en fluide cryogénique.

Ainsi, grâce à l'utilisation d'un réseau neuronal artificiel, il est possible de prévoir, en fonction de l'état physique actuel du circuit d'alimentation en fluide cryogénique, un instant approprié pour l'ouverture de chaque vanne afin de satisfaire, à la fin de la mise en froid, les critères prédéterminés de mise en froid, et cela sans recours à un modèle physique complexe exigeant un grand nombre d'expériences préalables ou un ordinateur de grande puissance.

Les critères prédéterminés de mise en froid peuvent notamment comprendre que la température à au moins un endroit prédéterminé du circuit d'alimentation en fluide cryogénique soit inférieure à un seuil de température prédéterminé. Plus particulièrement, ils peuvent comprendre que la température à au moins un endroit, voire même à plus d'un endroit, parmi une pluralité d'endroits prédéterminés du circuit d'alimentation en fluide cryogénique soit inférieure au seuil de température prédéterminé. On peut ainsi vérifier que les températures à travers le circuit d'alimentation en fluide cryogénique aient descendu suffisamment pour éviter des phénomènes nocifs tels que la cavitation, les gradients et chocs thermiques, etc. Alternativement ou en complément à un seuil de température, les critères prédéterminés de mise en froid peuvent comprendre que la pression à au moins un endroit prédéterminé du circuit d'alimentation en fluide cryogénique soit supérieure à un seuil de pression prédéterminé. Toutefois, d'autres critères peuvent aussi être envisagés, alternativement ou en complément à des seuils de température eu/ou pression à un ou plusieurs endroits du circuit d'alimentation en fluide cryogénique, comme par exemple un débit cumulé de fluide cryogénique, un seuil de jeu entre composants mécaniques, ou un autre critère lié à la tenue mécanique de composants tels que, entre autres, des paliers, des brides, des tirants ou des cannelures, ou au fonctionnement subséquent du système cryogénique (par exemple, la non cavitation de pompes, ou le remplissage subséquent reproductible de parties du système cryogénique avec un fluide cryogénique de fonctionnement homogène et monophasique).

Afin de mettre à jour régulièrement la prévision de l'instant approprié pour l'ouverture de chaque vanne, les étapes d'acquisition et de calcul peuvent être répétées tant qu'aucun temps restant jusqu'à l'instant correspondant auquel chaque vanne doit être ouverte ne soit inférieur à un seuil minimal. La période de répétition des étapes d'acquisition et de calcul peut être inférieure ou égale à ce seuil minimal.

Le réseau neuronal artificiel peut comprendre plusieurs couches entièrement connectées de plusieurs neurones artificiels chacune. Il peut notamment comprendre un ou plusieurs neurones artificiels ayant, comme fonction d'activation, une fonction d'Unité Exponentielle Linéaire, quoique d'autres fonctions d'activation soient alternativement envisageables.

Le procédé de mise en froid peut par ailleurs comprendre une étape préliminaire d'entrainement du réseau neuronal artificiel à partir de données expérimentales. Cette étape préliminaire peut comprendre plusieurs cycles successifs, notamment sous forme d' « époques » (en anglais : « epochs »), dans chacune desquelles l'ensemble des données expérimentales traverse le réseau neuronal artificiel dans les deux sens et un gradient est déterminé pour assurer la convergence vers un critère d'optimisation, et est conclue quand une mesure de performance du réseau neuronal artificiel ne s'améliore plus au-delà d'un seuil prédéterminé de variation sur un nombre prédéterminé de cycles successifs.

Un deuxième aspect de cette divulgation concerne une unité de commande d'un circuit d'alimentation en fluide cryogénique. Suivant ce deuxième aspect, cette unité de commande peut être apte à être connectée à un ou plusieurs capteurs pour acquérir une valeur d'état du circuit d'alimentation en fluide cryogénique à un instant courant et à une ou plusieurs vannes du circuit d'alimentation en circuit cryogénique pour commander leur ouverture, et peut comprendre un ordinateur programmé pour appliquer un réseau neuronal artificiel au calcul d'un instant correspondant d'ouverture de chaque vanne, pour atteindre, à partir de la valeur d'état du circuit d'alimentation en fluide cryogénique à l'instant courant, un état du circuit d'alimentation en fluide cryogénique satisfaisant un ou plusieurs critères prédéterminés de mise en froid à un instant prédéterminé dans le futur.

Un circuit d'alimentation en fluide cryogénique peut comprendre cette unité de commande avec lesdits capteurs et lesdites vannes. Il peut comprendre en outre une ou plusieurs turbopompes. Le fluide cryogénique peut notamment être un ergol. Ainsi, un propulseur peut comprendre une chambre propulsive et ce circuit d'alimentation en fluide cryogénique pour alimenter en ergol la chambre propulsive. Ce propulseur peut notamment être part d'un lanceur spatial, et plus spécifiquement d'un étage supérieur du lanceur spatial, en particulier d'un étage supérieur rallumable.

Brève description des dessins

[Fig. 1] La figure 1 est une vue schématique d'un lanceur spatial,

[Fig. 2] la figure 2 est une vue schématique d'un propulseur d'un étage supérieur du lanceur de la figure 1,

[Fig. 3] la figure 3 est une vue en coupe longitudinale d'une turbopompe d'un circuit d'alimentation en ergol cryogénique du propulseur de la figure 2,

[Fig. 4] la figure 4 illustre schématiquement la séquence d'ouverture de plusieurs vannes du même circuit d'alimentation en ergol cryogénique du propulseur de la figure 2 pour sa mise en froid,

[Fig. 5] la figure 5 est un schéma fonctionnel du procédé de mise en froid du même circuit d'alimentation en ergol cryogénique de la figure 2.

Description des modes de réalisation

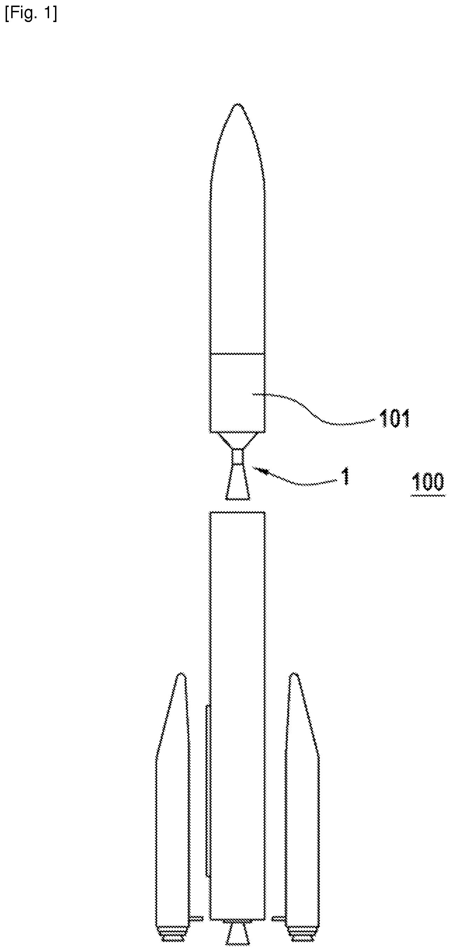

Le dispositif de mise en froid suivant la présente divulgation est applicable à la mise en froid de tout circuit d'alimentation en fluide cryogénique, mais notamment à la mise en froid de circuits d'alimentation en ergols cryogéniques, et plus particulièrement pour des propulseurs de lanceurs spatiaux, comme par exemple de l'étage supérieur 101 du lanceur 100 illustré sur la figure 1, qui peut être un étage supérieur rallumable en vol, par exemple pour mettre plusieurs charges utiles sur des orbites différentes.

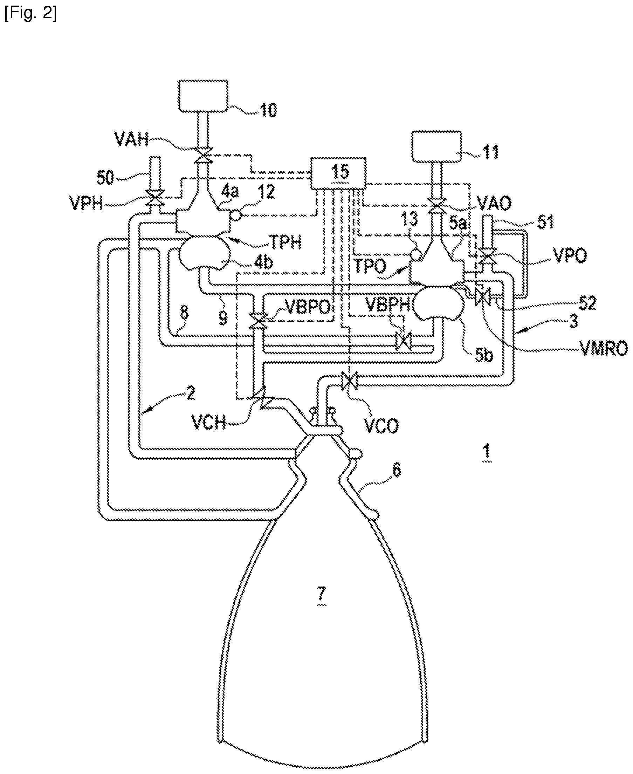

Un tel propulseur peut prendre la forme du moteur-fusée 1 illustré sur la figure 2. Comme dans le mode de réalisation illustré, le moteur-fusée 1 peut être un moteur-fusée à ergols liquides cryogéniques, comme par exemple hydrogène et oxygène liquides, comprenant un circuit d'alimentation 2, 3 de la chambre propulsive 7 pour chaque ergol. Le moteur-fusée 1 peut comporter des turbopompes TPH, TPO pour impulser chaque ergol à travers le circuit d'alimentation respectif. Chaque turbopompe TPH, TPO peut comprendre une partie pompe 4a, 5a pour pomper l'ergol respectif, et une partie turbine 4b, 5b, couplée à la partie pompe 4a, 5a correspondante pour assurer l'actionnement de cette dernière. Plus spécifiquement, le moteur-fusée 1 illustré peut être du type dit à cycle de détente (en anglais, « expander cycle »), dans lequel les parties turbine 4b, 5b sont elles-mêmes actionnées par l'un des ergols après son passage par un échangeur de chaleur régénératif 6 adjacent aux parois de la chambre propulsive 7 du moteur-fusée 1.

Les circuits d'alimentation 2, 3 peuvent aussi comporter des vannes d'alimentation VAH, VAO interposées entre les réservoirs 10, 11 contenant les propergols et les admissions des parties pompe 4a, 5a des turbopompes correspondantes TPH, TPO, des vannes de purge VPH, VPO situées sur des dérivations 50,51 en aval de chaque partie pompe 4a, 5a, pour purger, à travers ces dérivations, des fluides ayant traversé en amont les pompes 4a, 5a, des vannes de contournement VBPH, VBPO disposées sur des dérivations 8,9 autour des parties turbine 4b, 5b pour permettre leur contournement par l'ergol chauffé par l'échangeur 6, des vannes de chambre propulsive VCH, VCO juste en amont de la chambre propulsive 7, ainsi qu'une vanne de mise à froid VMRO sur un conduit 52 pour la mise en froid, par exemple, de roulements de la turbopompe TPO. Chaque circuit d'alimentation 2, 3 peut comporter par ailleurs un ensemble de capteurs 12, 13. Chacun de ces ensembles de capteurs 12, 13 peut notamment comprendre des capteurs de température, pression, vibration, et/ou jeu. Le moteur-fusée 1 peut aussi comprendre une unité de commande 15, quoiqu'il est envisageable d'avoir une unité de commande séparée pour chaque circuit d'alimentation 2, 3, et notamment pour piloter leurs mises en froid respectives. L'unité de commande 15 peut être connectée aux ensembles de capteurs 12, 13, afin de recevoir une ou plusieurs valeurs de mesure d'un état de chaque circuit d'alimentation 2, 3 à un instant courant. L'unité de commande 15 peut aussi être connectée à chacune des vannes susmentionnées, pour commander leur ouverture et/ou fermeture, notamment pour la mise en froid de chaque circuit d'alimentation 2, 3. Toutefois, l'invention n'est nullement limitée à la mise en froid de tels moteurs-fusées, et peut également être appliquée à la mise en froid d'autres types de circuits d'alimentation en ergols cryogéniques, et même à celle d'autres circuits d'alimentation en fluides cryogéniques en général.

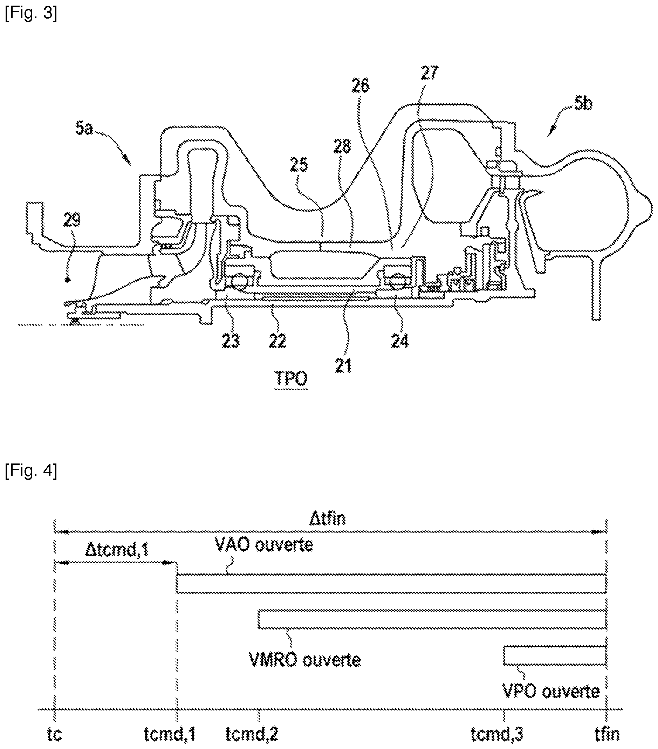

Les critères fonctionnels à satisfaire pour la mise en froid du circuit d'alimentation en oxygène liquide 3 illustré, et plus particulièrement de la partie pompe 5a de sa turbopompe TPO, illustrée en plus grand détail sur la figure 3, peuvent comprendre, par exemple, deux seuils de température $S_1$, $S_2$ et un seuil de pression $S_3$. Plus spécifiquement, un premier critère peut être que la température à un premier endroit 21 situé à proximité de l'arbre 22 de la turbopompe TPO, entre un premier palier 23 côté pompe et un deuxième palier 24 côté turbine, soit inférieure au premier seuil de température $S_1$. Un deuxième critère peut être qu'à au moins deux endroits parmi trois endroits 25, 26, 27 différents du carter 28 de la turbopompe TPO, dont par exemple un endroit 25 entre les paliers 23, 24 et deux endroits 26, 27 adjacents au deuxième palier 24, la température soit inférieure au deuxième seuil de température $S_2$, et le troisième critère peut être que la pression à un endroit 29 dans le canal d'admission de la partie pompe 5a soit supérieure à un seuil de pression $S_3$. Pour surveiller que ces critères soient satisfaits, l'ensemble de capteurs 13 du circuit 3 d'alimentation en oxygène liquide peut comprendre des capteurs de température et/ou pression situés à ces endroits. D'autres critères peuvent néanmoins être envisagés, alternativement ou en complément à des seuils de température eu/ou pression à un ou plusieurs endroits du circuit d'alimentation en fluide cryogénique, comme par exemple un débit cumulé de fluide cryogénique, un seuil de jeu entre composants mécaniques, ou un autre critère lié à la tenue mécanique de composants, ou au fonctionnement subséquent du système cryogénique.

Toutefois, quand la mise en froid doit être finalisée à un instant t<sub>fin</sub> prédéterminé dans le futur, par exemple pour un rallumage prévu du moteur-fusée 1, on peut souhaiter anticiper à l'avance à quel instant chaque vanne du circuit devra être ouverte pour satisfaire ces critères à l'instant t$_{fin}$. Comme illustré sur la figure 4, cette ouverture peut suivre par exemple une séquence dans laquelle la vanne d'alimentation VAO est ouverte en premier à un instant t$_{cmd1}$, la vanne de mise en froid VMRO est ouverte ensuite à un instant t$_{cmd2}$, et la vanne de purge VPO est ouverte en dernier à un instant t$_{cmd3}$, les trois vannes VAO, VMRO, VPO restant ouvertes à partir de leurs instants d'ouverture respectifs jusqu'à l'instant prédéterminé t$_{fin}$.

Un mode de réalisation d'un procédé de mise en froid du circuit d'alimentation 3, peut utiliser un réseau neuronal artificiel programmé dans un ordinateur de l'unité de commande 15 pour prévoir les instants t$_{cmd,1}$, t$_{cmd,2}$, et t$_{cmd,3}$ auxquels les vannes VAO, VMRO, VPO respectives doivent être ouvertes afin de satisfaire les critères de mise en froid du circuit d'alimentation en oxygène liquide 3 à l'instant t$_{fin}$ prédéterminé dans le futur, et cela en fonction de l'état du circuit d'alimentation 3 à un instant courant t$_c$. Ce réseau neuronal artificiel peut comprendre plusieurs couches entièrement connectées de neurones artificiels. Par exemple, le réseau neuronal artificiel peut comprendre cinq couches avec respectivement 12, 24, 24, 24, et 3 neurones artificiels.

Chacun des neurones artificiels peut avoir, comme fonction d'activation, une fonction d'Unité Exponentielle Linéaire (en anglais : « Exponential Linear Unit » ou ELU), suivant la formule suivante :

[Math. 1]

$$f(x) = \begin{cases} x, & x > 0 \\ \propto \cdot (e^x - 1), & x \leq 0 \end{cases}$$

Dans cette formule, le coefficient $\propto$ peut être un nombre réel égal ou supérieur à zéro. Quand ce coefficient $\propto$ est égal à zéro, on nomme cette fonction plutôt fonction d'Unité Linéaire Rectifiée (en anglais, « Rectified Linear Unit » ou ReLU), mais elle peut toujours être considérée comme étant un cas particulier de fonction d'Unité Exponentielle Linéaire. Toutefois, d'autres fonctions connues de la personne du métier, comme par exemple une fonction SOFTPLUS pourraient être utilisées alternativement comme fonctions d'activation.

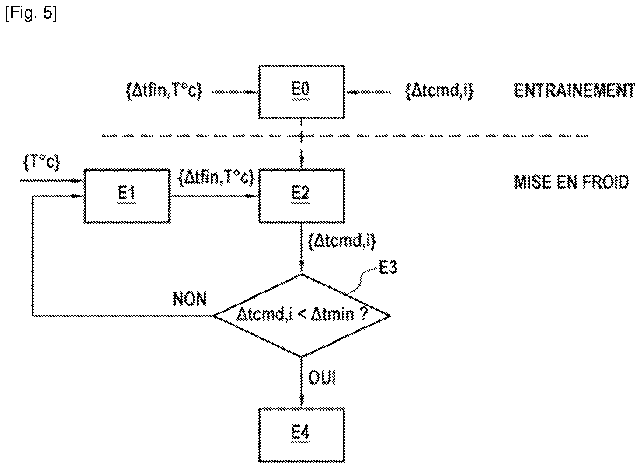

Afin de permettre au réseau neuronal artificiel de prévoir des instants d'ouverture t$_{cmd,i}$ de chaque vanne pour satisfaire des critères de mise en froid à l'instant t$_{fin}$ prédéterminé dans le futur, en fonction de l'état du circuit d'alimentation à un instant courant t$_c$, le procédé de mise en froid peut comprendre une étape E0 préalable d'entrainement du réseau neuronal artificiel dans lequel celui-ci est alimenté avec des données expérimentales préalablement acquises, comme vecteurs d'entrée et de sortie, dans une succession de cycles ou « époques » (en anglais : « epochs ») pour créer un modèle numérique du circuit d'alimentation, comme illustré sur la figure 5. Les vecteurs d'entrée peuvent prendre la forme {Δt$_{fin}$,T°$_c$}, dans lequel Δt$_{fin}$ représente le temps restant jusqu'à l'instant prédéterminé t$_{fin}$, à partir de l'instant courant t$_c$, comme illustré sur la figure 4, et T°$_c$ représente l'état du circuit d'alimentation à l'instant courant t$_c$, par exemple en termes de températures et/ou pressions à des endroits prédéterminés du circuit d'alimentation, quoique d'autres paramètres puissent être choisis, comme notamment un jeu mécanique. Les vecteurs de sortie peuvent prendre la forme {Δt$_{cmd,i}$}, dans lesquels Δt$_{cmd,i}$ représente le temps restant, à partir de l'instant courant t$_c$, jusqu'à l'instant d'ouverture t$_{cmd,i}$ de chaque vanne. L'étape préalable d'entraînement E0 peut être conclue lorsqu'une mesure de performance, comme par exemple la fonction de perte, du réseau neuronal artificiel ne s'améliore plus au-delà d'un seuil prédéterminé de variation sur un nombre prédéterminé de cycles (« époques ») successifs. Par variation on peut entendre notamment une différence entre valeur de la fonction de perte à chaque cycle et la valeur minimale de la fonction de perte depuis le début de cette étape préalable d'entraînement. Le seuil prédéterminé de variation peut être par exemple de 0,1, et ledit nombre prédéterminé de cycles peut être par exemple 500.

Quand le réseau neuronal artificiel a été entraîné dans l'étape préalable E0, il peut être programmé sur l'ordinateur de l'unité de commande 15, qui pourra ainsi l'appliquer pour déterminer en temps réel les instants d'ouverture t$_{cmd,i}$ de chaque vanne pour satisfaire des critères de mise en froid à l'instant t$_{fin}$ prédéterminé dans le futur, en fonction de l'état du circuit d'alimentation à un instant courant t$_c$. Pour cela, dans une étape E1 d'acquisition, la valeur T°$_c$ d'état du circuit d'alimentation à l'instant courant t$_c$ est acquise par l'unité de commande 15 à travers l'ensemble de capteurs 13. Ensuite, dans une étape de calcul E2, l'ordinateur de l'unité de commande 15 peut appliquer le réseau neuronal artificiel en y introduisant la valeur T°$_c$ d'état du circuit d'alimentation à l'instant courant t$_c$, avec le temps restant Δt$_{fin}$ jusqu'à l'instant prédéterminé t$_{fin}$, comme vecteur d'entrée {Δt$_{fin}$,T°$_c$}, pour obtenir ainsi un vecteur de sortie {Δt$_{cmd,i}$} de temps restants Δt$_{cmd,i}$ à partir de l'instant courant t$_c$, jusqu'à l'instant d'ouverture t$_{cmd,i}$ de chaque vanne.

Ensuite, dans une étape de comparaison E3, les valeurs de temps restants Δt$_{cmd,i}$ jusqu'à l'instant d'ouverture t$_{cmd,i}$ de chaque vanne peuvent être comparées avec un seuil minimal Δt$_{min}$ de, par exemple, 5 s, pour déterminer si le temps restant Δt$_{cmd,i}$ jusqu'à l'instant d'ouverture t$_{cmd,i}$ d'au moins une des vannes est inférieur à ce seuil minimal Δt$_{min}$.

Tant que le temps restant $\Delta t_{cmd,i}$ pour aucune des vannes n'est pas encore inférieur au seuil minimal $\Delta t_{min}$, les étapes d'acquisition E1 et de calcul E2 peuvent être répétées pour mettre à jour les estimations de temps restants $\Delta t_{cmd,i}$ à partir de l'instant courant $t_c$, jusqu'à l'instant d'ouverture $t_{cmd,i}$ de chaque vanne. La période de répétition des étapes d'acquisition E1 et de calcul E2 peut être inférieure ou égale au seuil minimal $\Delta t_{min}$. Si, toutefois, le temps restant $\Delta t_{cmd,i}$ pour au moins une des vannes est inférieur au seuil minimal $\Delta t_{min}$, la répétition cyclique des étapes d'acquisition E1 et de calcul E2 peut être interrompue, et le procédé peut progresser à une étape E4 d'ouverture des vannes aux instants d'ouverture $t_{cmd,i}$ respectifs calculés lors de la dernière répétition de l'étape de calcul E2, de manière à effectuer la mise en froid et satisfaire des critères de mise en froid à l'instant prédéterminé $t_{fin}$ quand la mise en froid peut être finalisée.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Procédé de mise en froid d'un circuit (3) d'alimentation en fluide cryogénique comprenant les étapes suivantes :

   acquisition (E1) d'une valeur (T°$_c$) d'état du circuit (3) d'alimentation en fluide cryogénique à un instant courant ($t_c$),
   calcul (E2), par un ordinateur appliquant un réseau neuronal artificiel, d'un instant correspondant ($t_{cmd,i}$) d'ouverture de chaque vanne (VAO, VMRO, VPO) parmi une ou plusieurs vannes du circuit (3) d'alimentation en fluide cryogénique pour atteindre, à partir de la valeur (T°$_c$) d'état du circuit (3) d'alimentation en fluide cryogénique à l'instant courant ($t_c$), un état du circuit (3) d'alimentation en fluide cryogénique satisfaisant un ou plusieurs critères prédéterminés de mise en froid à un instant ($t_{fin}$) prédéterminé dans le futur, et
   ouverture (E4) de chaque vanne (VAO, VMRO, VPO) à l'instant correspondant ($t_{cmd,i}$) pour mettre en froid le circuit (3) d'alimentation en fluide cryogénique.

2. Procédé de mise en froid du circuit (3) d'alimentation en fluide cryogénique suivant la revendication 1, dans lequel les critères prédéterminés de mise en froid comprennent que la température à au moins un endroit prédéterminé (21, 25, 26, 27) du circuit (3) d'alimentation en fluide cryogénique soit inférieure à un seuil de température prédéterminé.

3. Procédé de mise en froid du circuit d'alimentation (3) en fluide cryogénique suivant la revendication 2, dans lequel les critères prédéterminés de mise en froid comprennent que la température à au moins un endroit parmi une pluralité d'endroits prédéterminés (21, 25, 26, 27) du circuit d'alimentation (3) en fluide cryogénique soit inférieure au seuil de température prédéterminé.

4. Procédé de mise en froid du circuit (3) d'alimentation en fluide cryogénique suivant la revendication 3, dans lequel les critères prédéterminés de mise en froid comprennent que la température à plus d'un endroit parmi la pluralité d'endroits prédéterminés (21, 25, 26, 27) du circuit d'alimentation en fluide cryogénique soit inférieure au seuil de température prédéterminé.

5. Procédé de mise en froid du circuit (3) d'alimentation en fluide cryogénique suivant l'une quelconque des revendications 1 à 4, dans lequel les critères prédéterminés de mise en froid comprennent que la pression à au moins un endroit prédéterminé (28) du circuit (3) d'alimentation en fluide cryogénique soit supérieure à un seuil de pression prédéterminé.

6. Procédé de mise en froid du circuit (3) d'alimentation en fluide cryogénique suivant l'une quelconque des revendications précédentes, dans lequel les étapes d'acquisition et de calcul (E1,E2) sont répétées tant qu'aucun temps restant ($\Delta t_{cmd,i}$) jusqu'à l'instant correspondant ($t_{cmd,i}$) auquel chaque vanne (VAO, VMRO, VPO) doit être ouverte ne soit inférieur à un seuil minimal ($\Delta t_{min}$).

7. Procédé de mise en froid du circuit (3) d'alimentation en fluide cryogénique suivant l'une quelconque des revendications précédentes, dans lequel le réseau neuronal artificiel comprend plusieurs couches entièrement connectées de plusieurs neurones artificiels chacune.

**8.** Procédé de mise en froid du circuit (3) d'alimentation en fluide cryogénique suivant l'une quelconque des revendications précédentes, dans lequel le réseau neuronal artificiel comprend un ou plusieurs neurones artificiels ayant, comme fonction d'activation, une fonction d'Unité Exponentielle Linéaire.

**9.** Procédé de mise en froid du circuit (3) d'alimentation en fluide cryogénique suivant l'une des revendications précédentes, comprenant une étape préliminaire (E0) d'entraînement du réseau neuronal artificiel à partir de données expérimentales.

**10.** Procédé de mise en froid du circuit (3) d'alimentation en fluide cryogénique suivant la revendication 9, dans lequel l'étape préliminaire (E0) d'entraînement comprend des cycles successifs et est conclue quand une mesure de performance du réseau neuronal artificiel ne s'améliore plus au-delà d'un seuil prédéterminé de variation sur un nombre prédéterminé de cycles successifs.

**11.** Unité de commande (15) d'un circuit (3) d'alimentation en fluide cryogénique, apte à être connectée à un ou plusieurs capteurs (13) pour acquérir une valeur ($T°_c$) d'état du circuit (3) d'alimentation en fluide cryogénique à un instant courant ($t_c$) et à une ou plusieurs vannes (VAO, VMRO, VPO) du circuit (3) d'alimentation en fluide cryogénique pour commander leur ouverture, et comprenant un ordinateur programmé pour appliquer un réseau neuronal artificiel au calcul d'un instant correspondant ($t_{cmd,i}$) d'ouverture de chaque vanne (VAO, VMRO, VPO) pour atteindre, à partir de la valeur ($T°_c$) d'état du circuit (3) d'alimentation en circuit cryogénique à l'instant courant ($t_c$), un état du circuit (3) d'alimentation en fluide cryogénique satisfaisant un ou plusieurs critères prédéterminés de mise en froid à un instant ($t_{fin}$) prédéterminé dans le futur.

**12.** Circuit (3) d'alimentation en fluide cryogénique comprenant l'unité de commande (15) suivant la revendication 11, lesdits capteurs (13) et lesdites vannes (VAO, VMRO, VPO).

**13.** Circuit (3) d'alimentation en fluide cryogénique suivant la revendication 12, comprenant en outre une ou plusieurs turbopompes (TPO).

**14.** Circuit (3) d'alimentation en fluide cryogénique suivant l'une quelconque des revendications 12 à 13, dans lequel le fluide cryogénique est un ergol.

**15.** Propulseur (1) comprenant une chambre propulsive et le circuit (3) d'alimentation en fluide cryogénique suivant la revendication 14 pour alimenter en ergol la chambre propulsive (7).

**Patentansprüche**

**1.** Verfahren zur Kühlung eines Kreislaufs (3) zur Versorgung mit kryogenem Fluid, das die folgenden Schritte umfasst:

Erfassen (E1) eines Zustandswerts ($T°_c$) des Kreislaufs (3) zur Versorgung mit kryogenem Fluid zu einem aktuellen Zeitpunkt ($t_c$),
Berechnen (E2), durch einen Computer, der ein künstliches neuronales Netz anwendet, eines entsprechenden Zeitpunkts ($t_{cmd,i}$) der Öffnung jedes Ventils (VAO, VMRO, VPO) unter einem oder mehreren Ventilen des Kreislaufs (3) zur Versorgung mit kryogenem Fluid, um ausgehend von dem Zustandswert ($T°_c$) des Kreislaufs (3) zur Versorgung mit kryogenem Fluid zu dem aktuellen Zeitpunkt ($t_c$) einen Zustand des Kreislaufs (3) zur Versorgung mit kryogenem Fluid zu erreichen, der ein oder mehrere vorbestimmte Kühlungskriterien zu einem vorbestimmten Zeitpunkt ($t_{fin}$) in der Zukunft erfüllt, und
Öffnen (E4) jedes Ventils (VAO, VMRO, VPO) zu dem entsprechenden Zeitpunkt ($t_{cmd,i}$), um den Kreislauf (3) zur Versorgung mit kryogenem Fluid zu kühlen.

**2.** Verfahren zur Kühlung des Kreislaufs (3) zur Versorgung mit kryogenem Fluid nach Anspruch 1, wobei die vorbestimmten Kühlungskriterien umfassen, dass die Temperatur an mindestens einer vorbestimmten Stelle (21, 25, 26, 27) des Kreislaufs (3) zur Versorgung mit kryogenem Fluid niedriger als ein vorbestimmter Temperaturschwellenwert ist.

**3.** Verfahren zur Kühlung des Kreislaufs (3) zur Versorgung mit kryogenem Fluid nach Anspruch 2, wobei die vorbestimmten Kühlungskriterien umfassen, dass die Temperatur an mindestens einer Stelle unter mehreren vorbestimmten Stellen (21, 25, 26, 27) des Kreislaufs (3) zur Versorgung mit kryogenem Fluid niedriger als der vorbestimmt

Temperaturschwellenwert ist.

4. Verfahren zur Kühlung des Kreislaufs (3) zur Versorgung mit kryogenem Fluid nach Anspruch 3, wobei die vorbestimmten Kühlungskriterien umfassen, dass die Temperatur an mehr als einer Stelle unter den mehreren vorbestimmten Stellen (21, 25, 26, 27) des Kreislaufs zur Versorgung mit kryogenem Fluid niedriger als der vorbestimmte Temperaturschwellenwert ist.

5. Verfahren zur Kühlung des Kreislaufs (3) zur Versorgung mit kryogenem Fluid nach einem der Ansprüche 1 bis 4, wobei die vorbestimmten Kühlungskriterien umfassen, dass der Druck an mindestens einer vorbestimmten Stelle (28) des Kreislaufs (3) zur Versorgung mit kryogenem Fluid höher als ein vorbestimmter Druckschwellenwert ist.

6. Verfahren zur Kühlung des Kreislaufs (3) zur Versorgung mit kryogenem Fluid nach einem der vorhergehenden Ansprüche, wobei die Schritte des Erfassens und des Berechnens (E1, E2) so lange wiederholt werden, wie keine verbleibende Zeit ($\Delta t_{cmd,i}$) bis zu dem entsprechenden Zeitpunkt ($t_{cmd,i}$), zu dem jedes Ventil (VAO, VMRO, VPO) geöffnet werden muss, niedriger als ein Mindestschwellenwert ($\Delta t_{min}$) ist.

7. Verfahren zur Kühlung des Kreislaufs (3) zur Versorgung mit kryogenem Fluid nach einem der vorhergehenden Ansprüche, wobei das künstliche neuronale Netz mehrere vollständig verbundene Schichten von jeweils mehreren künstlichen Neuronen umfasst.

8. Verfahren zur Kühlung des Kreislaufs (3) zur Versorgung mit kryogenem Fluid nach einem der vorhergehenden Ansprüche, wobei das künstliche neuronale Netz ein oder mehrere künstliche Neuronen umfasst, die als Aktivierungsfunktion eine lineare Exponentialeinheitsfunktion aufweisen.

9. Verfahren zur Kühlung des Kreislaufs (3) zur Versorgung mit kryogenem Fluid nach einem der vorhergehenden Ansprüche, das einen vorhergehenden Schritt (E0) zum Trainieren des künstlichen neuronalen Netzes ausgehend von experimentellen Daten umfasst.

10. Verfahren zur Kühlung des Kreislaufs (3) zur Versorgung mit kryogenem Fluid nach Anspruch 9, wobei der vorhergehende Schritt (E0) des Trainierens aufeinanderfolgende Zyklen umfasst und abgeschlossen wird, wenn eine Leistungsmessung des künstlichen neuronalen Netzes sich über eine vorbestimmte Anzahl aufeinanderfolgender Zyklen nicht mehr über einen vorbestimmten Veränderungsschwellenwert hinaus verbessert.

11. Einheit (15) zur Steuerung eines Kreislaufs (3) zur Versorgung mit kryogenem Fluid, die geeignet ist, mit einem oder mehreren Sensoren (13) zum Erfassen eines Zustandswerts ($T°_c$) des Kreislaufs (3) zur Versorgung mit kryogenem Fluid zu einem aktuellen Zeitpunkt ($t_c$) und mit einem oder mehreren Ventilen (VAO, VMRO, VPO) des Kreislaufs (3) zur Versorgung mit kryogenem Fluid verbunden zu sein, um ihre Öffnung zu steuern, und einen Computer umfasst, der programmiert ist, um ein künstliches neuronales Netz bei der Berechnung eines entsprechenden Zeitpunkts ($t_{cmd,i}$) der Öffnung jedes Ventils (VAO, VMRO, VPO) anzuwenden, um ausgehend von dem Zustandswert ($T°_c$) des Kreislaufs (3) zur Versorgung mit kryogenem Fluid zu dem aktuellen Zeitpunkt ($t_c$) einen Zustand des Kreislaufs (3) zur Versorgung mit kryogenem Fluid zu erreichen, der ein oder mehrere vorbestimmte Kühlungskriterien zu einem vorbestimmten Zeitpunkt ($t_{fin}$) in der Zukunft erfüllt.

12. Kreislauf (3) zur Versorgung mit kryogenem Fluid, der die Steuereinheit (15) nach Anspruch 11, die Sensoren (13) und die Ventile (VAO, VMRO, VPO) umfasst.

13. Kreislauf (3) zur Versorgung mit kryogenem Fluid nach Anspruch 12, der ferner eine oder mehrere Turbopumpen (TPO) umfasst.

14. Kreislauf (3) zur Versorgung mit kryogenem Fluid nach einem der Ansprüche 12 bis 13, wobei das kryogene Fluid ein Raketentreibstoff ist.

15. Triebwerk (1), das eine Brennkammer und den Kreislauf (3) zur Versorgung mit kryogenem Fluid nach Anspruch 14 umfasst, um die Brennkammer (7) mit Raketentreibstoff zu versorgen.

**Claims**

1. A method for chilling down a cryogenic fluid supply circuit (3) comprising the following steps:

   acquiring (E1) a state value ($T°_c$) of the cryogenic fluid supply circuit (3) at a current time ($t_c$),
   computing (E2), by a computer applying an artificial neural network, a corresponding opening time ($t_{cmd,i}$) of each valve (VAO, VMRO, VPO) out of one or more valves of the cryogenic fluid supply circuit (3) to reach, from the state value ($T°_c$) of the cryogenic fluid supply circuit (3) at the current time ($t_c$), a state of the cryogenic fluid supply circuit (3) meeting one or more predetermined chilldown criteria at a predetermined time ($t_{fin}$) in the future, and
   opening (E4) each valve (VAO, VMRO, VPO) at the corresponding time ($t_{cmd,i}$) to chill down the cryogenic fluid supply circuit (3).

2. The method for chilling down the cryogenic fluid supply circuit (3) as claimed in claim 1, wherein the predetermined chilldown criteria comprise the temperature in at least one predetermined position (21, 25, 26, 27) of the cryogenic fluid supply circuit (3) being less than a predetermined temperature threshold.

3. The method for chilling down the cryogenic fluid supply circuit (3) as claimed in claim 2, wherein the predetermined chilldown criteria comprise the temperature in at least one position out of a plurality of predetermined positions (21, 25, 26, 27) of the cryogenic fluid supply circuit (3) being less than the predetermined temperature threshold.

4. The method for chilling down the cryogenic fluid supply circuit (3) as claimed in claim 3, wherein the predetermined chilldown criteria comprise the temperature in more than one position out of the plurality of predetermined positions (21, 25, 26, 27) of the cryogenic fluid supply circuit being less than the predetermined temperature threshold.

5. The method for chilling down the cryogenic fluid supply circuit (3) as claimed in any of claims 1 to 4, wherein the predetermined chilldown criteria comprise the pressure in at least one predetermined position (28) of the cryogenic fluid supply circuit (3) being greater than a predetermined pressure threshold.

6. The method for chilling down the cryogenic fluid supply circuit (3) as claimed in any of the preceding claims, wherein the acquiring and computing steps (E1 ,E2) are repeated as long as no remaining time ($\Delta t_{cmd,i}$) until the corresponding time ($t_{cmd,i}$) at which each valve (VAO, VMRO, VPO) must be opened is less than a minimum threshold ($\Delta t_{min}$).

7. The method for chilling down the cryogenic fluid supply circuit (3) as claimed in any of the preceding claims, wherein the artificial neural network comprises several entirely connected layers of several artificial neurons each.

8. The method for chilling down the cryogenic fluid supply circuit (3) as claimed in any of the preceding claims, wherein the artificial neural network comprises one or more artificial neurons having, as activation function, an Exponential Linear Unit function.

9. The method for chilling down the cryogenic fluid supply circuit (3) as claimed in one of the preceding claims, comprising a preliminary step (E0) of training the artificial neural network based on experimental data.

10. The method for chilling down the cryogenic fluid supply circuit (3) as claimed in claim 9, wherein the preliminary training step (E0) comprises successive cycles and is concluded when a measurement of performance of the artificial neural network no longer improves above a predetermined variation threshold over a predetermined number of successive cycles.

11. A control unit (15) of a cryogenic fluid supply circuit (3), able to be connected to one or more sensors (13) to acquire a state value ($T°_c$) of the cryogenic fluid supply circuit (3) at a current time ($t_c$) and to one or more valves (VAO, VMRO, VPO) of the cryogenic fluid supply circuit (3) to control their opening, and comprising a computer programmed to apply an artificial neural network to the computing of a corresponding time ($t_{cmd,i}$) of opening of each valve (VAO, VMRO, VPO) to reach, starting from the state value ($T°_c$) of the cryogenic fluid supply circuit (3) at the current time ($t_c$), a state of the cryogenic fluid supply circuit (3) meeting one or more predetermined chilldown criteria at a predetermined time ($t_{fin}$) in the future.

12. A cryogenic fluid supply circuit (3) comprising the control unit (15) as claimed in claim 11, said sensors (13) and said valves (VAO, VMRO, VPO).

**13.** The cryogenic fluid supply circuit (3) as claimed in claim 12, further comprising one or more turbopumps (TPO).

**14.** The cryogenic fluid supply circuit (3) as claimed in any of claims 12 to 13, wherein the cryogenic fluid is a propellant.

**15.** A thruster (1) comprising a thrust chamber and the cryogenic fluid supply circuit (3) as claimed in claim 14 for supplying the thrust chamber (7) with propellant.

[Fig. 1]

[Fig. 2]

[Fig. 3]

TPO

[Fig. 4]

Δtfin

Δtcmd,1

VAO ouverte

VMRO ouverte

VPO ouverte

tc    tcmd,1    tcmd,2    tcmd,3    tfin

[Fig. 5]

$\{\Delta tfin,T°c\}$ ——→ E0 ←—— $\{\Delta tcmd,i\}$   ENTRAINEMENT

$\{T°c\}$ → E1 —$\{\Delta tfin,T°c\}$→ E2   MISE EN FROID

$\{\Delta tcmd,i\}$

NON   E3

$\Delta tcmd,i < \Delta tmin$ ?

OUI

E4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2994731